# EUROPEAN PATENT SPECIFICATION

(11) **EP 1 839 731 B1**
(45) Date of publication and mention of the grant of the patent: **09.02.2011**
(21) Application number: 07005668.4
(22) Date of filing: 20.03.2007
(51) Int. Cl.: B01D 71/56, B01D 61/02, B01D 69/02, B01D 67/00

(54) **Composite polyamide reverse osmosis membrane showing high boron rejection and method of producing the same**
Umkehrosmosemembrane aus Komposit-Polyamid mit hoher Borabstoßung und Verfahren zu ihrer Herstellung
Membrane d'osmose inverse composite en polyamide manifestant un fort rejet du bore et son procédé de fabrication

(30) Priority: 31.03.2006 US 395620
(43) Date of publication of application: 03.10.2007
(73) Proprietor: SAEHAN INDUSTRIES, INC., Kyongsangbuk-do 712-712 (KR)
(72) Inventor: Ja-Young, Koo, Billerica, Massachusetts, 01862 (US); Sung Pyo, Hong, Gumi-si, Gyeongsangbuk-do 730-130 (KR)
(74) Representative: Lenz, Steffen

(56) References cited:
- JP-A- 2 293 029
- JP-A- 2006 021 094
- US-A- 4 278 548
- US-A- 4 915 839
- US-B1- 6 290 856

## Description

### BACKGROUND OF THE INVENTION

The present invention relates generally to reverse osmosis membranes and more particularly to a composite polyamide reverse osmosis membrane and to a method of producing the same.

It is known that dissolved substances can be separated from their solvents by the use of various types of selective membranes, such selective membranes including - listed in order of increasing pore size - reverse osmosis membranes, ultrafiltration membranes and microfiltration membranes. One use to which reverse osmosis membranes have previously been put is in the desalination of brackish water or seawater to provide large volumes of relatively non-salty water suitable for industrial, agricultural or home use. What is involved in the desalination of brackish water or seawater using reverse osmosis membranes is literally a filtering out of salts and other dissolved ions or molecules from the salty water by forcing the salty water through a reverse osmosis membrane whereby purified water passes through the membrane while salts and other dissolved ions and molecules do not pass through the membrane. Osmotic pressure works against the reverse osmosis process, and the more concentrated the feed water, the greater the osmotic pressure which must be overcome.

A reverse osmosis membrane, in order to be commercially useful in desalinating brackish water or seawater on a large scale, must possess certain properties. One such property is that the membrane has a high salt rejection coefficient. In fact, for the desalinated water to be suitable for many commercial applications, the reverse osmosis membrane should have a salt rejection capability of at least about 97%. Another important property of a reverse osmosis membrane is that the membrane possesses a high flux characteristic, i.e., the ability to pass a relatively large amount of water through the membrane at relatively low pressures. Typically, the flux for the membrane should be greater than 17 litres/square meter hour (l/m²h) [10 gallons/ft²-day (gfd)] at a pressure of 55.2 bar [800 psi] for seawater and should be greater than 25.5 l/m²h [15 gfd] at a pressure of 15.2 bar [220 psi] for brackish water. For certain applications, a rejection rate that is less than that which would otherwise be desirable may be acceptable in exchange for higher flux and vice versa.

One common type of reverse osmosis membrane is a composite membrane comprising a microporous support and a thin polyamide film formed on the microporous support. Typically, the polyamide film is formed by an interfacial polymerization of a polyfunctional amine and a polyfunctional acyl halide.

An example of the aforementioned composite polyamide reverse osmosis membrane is disclosed in U.S. Patent No. 4,277,344, inventor Cadotte, which issued July 7, 1981, and which is incorporated herein by reference. The aforementioned patent describes an aromatic polyamide film which is the interfacial reaction product of an aromatic polyamine having at least two primary amines substituents with an aromatic acyl halide having at least three acyl halide substituents. In the preferred embodiment, a porous polysulfone support is coated with m-phenylenediamine in water. After removal of excess m-phenylenediamine solution from the coated support, the coated support is covered with a solution of trimesoyl chloride dissolved in "FREON" TF solvent (trichlorotrifluoroethane). The contact time for the interfacial reaction is 10 seconds, and the reaction is substantially complete in 1 second. The resulting polysulfone/polyamide composite is then air-dried.

Although the Cadotte membrane described above exhibits good flux and good salt rejection, various approaches have been taken to further improve the flux and salt rejection of composite polyamide reverse osmosis membranes. In addition, other approaches have been taken to improve the resistance of said membranes to chemical degradation and the like. Many of these approaches have involved the use of various types of additives to the solutions used in the interfacial polycondensation reaction.

For example, in U.S. Patent No. 4,872,984, inventor Tomaschke, which issued October 10, 1989, and which is incorporated herein by reference, there is disclosed an aromatic polyamide membrane formed by (a) coating a microporous support with an aqueous solution comprising (i) an essentially monomeric, aromatic, polyamine reactant having at least two amine functional groups and (ii) a monofunctional, monomeric (i.e., polymerizable) amine salt to form a liquid layer on the microporous support, (b) contacting the liquid layer with an organic solvent solution of an essentially monomeric, aromatic, amine-reactive reactant comprising a polyfunctional acyl halide or mixture thereof, wherein the amine-reactive reactant has, on the average, at least about 2.2 acyl halide groups per reactant molecule, and (c) drying the product of step (b), generally in an oven at about 60°C to 110°C for about 1 to 10 minutes, so as to form a water permeable membrane.

Other patents disclosing the use of additives in the solutions employed in the interfacial polycondensation reaction include: U.S. Patent No. 4,983,291, inventors Chau et al., which issued January 8, 1991; U.S. Patent No. 5,576,057, inventors Hirose et al., which issued November 19, 1996; U.S. Patent No. 5,614,099, inventors Hirose et al., which issued March 25, 1997; U.S. Patent No. 4,950,404, inventor Chau, which issued August 21, 1990; U.S. Patent No. 4,830,885, inventors Tran et al., which issued May 16, 1989; U.S. Patent No. 6,245,234, inventors Koo et al., which issued June 12, 2001; U.S. Patent No. 6,063,278, inventors Koo et al., which issued May 16, 2000; and U.S. Patent No. 6,015,495, inventors Koo et al., which issued January 18, 2000, all of which are incorporated herein by reference.

Another approach which has been taken to improve the performance of a composite polyamide reverse osmosis membrane is disclosed in U.S. Patent No. 5,178,766, inventors Ikeda et al., which issued January 12, 1993, and which is incorporated herein by reference. According to Ikeda et al., the salt rejection rate of a composite polyamide reverse osmosis membrane is said to be improved by covalently bonding to the polyamide film of said membrane a compound having a quaternary nitrogen atom. Said quaternary nitrogen atom-containing compound is bonded to the polyamide film through a reactive group present in the compound, said reactive group being an epoxy group, an aziridine group, an episulfide group, a halogenated alkyl group, an amino group, a carboxylic group, a halogenated carbonyl group, or a hydroxy group.

While the membranes described above are suitable for certain applications, such membranes typically do not possess a sufficiently high rejection coefficient for certain substances, such as boron (typically present as boric acid), that are not dissociated within the pH range representing normal usage of the membranes (pH 7 to 8). Boric acid is present in seawater at a concentration of approximately 5 ppm. It has been reported that the repeated intake of water containing boric acid at a concentration in excess of 0.5 ppm (mg/1) could cause health problems.

In U.S. Patent No. 6,709,590, inventor Hirose, which issued March 23, 2004, and which is incorporated herein by reference, there is disclosed a composite reverse osmosis membrane that is said to be capable of separating nonelectrolyte organic compounds such as isopropyl alcohol and general pH range nondissociative substances such as boron with high rejections. Said membrane is said to be prepared by forming a polyamide skin layer on a porous support, the polyamide skin layer being formed by reacting an aromatic compound having at least two reactive amino groups with a polyfunctional acid halide compound having at least two reactive acid halide groups. Then, the polyamide skin layer is treated with a free chlorine aqueous solution containing a bromine salt whereby a bromine atom is incorporated into the polyamide skin layer. The patent also teaches that, when the polyamide skin layer was treated with a free chlorine aqueous solution in the absence of the bromine salt, no significant improvement in rejection was obtained.

JP 2006-021094 A, inventor Inoue, which has been published on January 26, 2006 discloses a composite polyamide reverse osmosis membrane showing higher rejection of non-electrolyte organic compounds such as isopropyl alcohol and specific ions. Said membrane is prepared by forming a polyamide skin layer on a porous support, the polyamide skin layer being formed by reacting an aromatic compound having two reactive amino groups with a polyfunctional acid halide compound having at least two reactive acid halide groups. Then, the residual amino groups left over as terminal groups after the polymerization reaction are reacted with nitrous acid in order to convert the amino groups to diazonium derivatives, which are in turn reacted with potassium iodide to replace the diazonium ions and to have iodine atoms bonded to the carbon atoms which the amino groups are originally attached to.

US 6 290 856 B1, inventor Beall, which has been issued on September 18, 2001 discloses an apparatus for providing a predetermined volume of biocidally treated water to a feed water side of a reverse osmosis device when it is shut down. A biocide dispenser treats a predetermined volume of water from a source with a biocidal agent such as iodine, chlorine and hydrogen peroxide.

### SUMMARY OF THE INVENTION

It is an object of the present invention to provide a novel composite polyamide reverse osmosis membrane.

It is another object of the present invention to provide a composite polyamide reverse osmosis membrane that has a high rejection coefficient for substances like boric acid that are not dissociated within the pH range at which these membranes are normally used.

The present invention is premised on the unexpected discovery that the rejection of a composite polyamide reverse osmosis membrane to general pH range nondissociative substances like boric acid can be significantly improved by covalently bonding iodine atoms to the polyamide layer of said membrane.

Accordingly, the present invention is directed at a composite polyamide reverse osmosis membrane, said composite polyamide reverse osmosis membrane being prepared by a process comprising:
(a) providing a microporous support;
(b) forming an aromatic polyamide layer over said microporous support; and
(c) treating said aromatic polyamide layer with a quantity of a compound, said compound comprising at least one iodine atom selected from the group consisting of molecular iodine, iodine monobromide, iodine monochloride, iodine trichloride, and potassium triiodide, whereby iodine atoms covalently bond to said aromatic polyamide layer, said aromatic polyamide layer contains iodine atoms in a concentration of at least 0.05% atomic concentration, as measured by electron spectroscopy for chemical analysis.

For purposes of the present specification and claims, the term "iodine atom" is intended to mean a non-electrolytic iodine atom. As such, the term "iodine atom" specifically excludes an iodide anion.

The present invention is also directed to a method of producing a composite polyamide reverse osmosis membrane of the type as mentioned above, said method comprising the steps of:
(a) providing a microporous support;
(b) forming an aromatic polyamide layer over said microporous support;
(c) providing an aqueous solution comprising a quantity of a compound, said compound comprising at least one iodine atom selected from the group consisting of molecular iodine, iodine monobromide, iodine monochloride, iodine trichloride, and potassium triiodide; and then
(d) treating said aromatic polyamide layer with said aqueous solution by contacting said polyamide layer with said aqueous solution at a pH ranging from about 2 to 11, whereby iodine atoms covalently bond to said aromatic polyamide layer.

Additional objects, features, aspects and advantages of the present invention will be set forth, in part, in the description which follows and, in part, will be obvious from the description or may be learned by practice of the invention. Certain embodiments of the invention will be described hereafter in sufficient detail to enable those skilled in the art to practice the invention, and it is to be understood that other embodiments may be utilized and that structural or other changes may be made without departing from the scope of the invention. The following detailed description is, therefore, not to be taken in a limiting sense, and the scope of the present invention is best defined by the appended claims.

### DETAILED DESCRIPTION OF PREFERRED EMBODIMENTS

As noted above, the present invention is based on the unexpected discovery that the rejection coefficient of a composite polyamide reverse osmosis membrane for boric acid and other general pH range nondissociative substances can be significantly improved by covalently incorporating iodine atoms into the aromatic polyamide layer of the membrane.

The composite polyamide reverse osmosis membrane whose aromatic polyamide layer may be modified to include iodine atoms may be virtually any composite polyamide reverse osmosis membrane of the type comprising a porous support and an aromatic polyamide film disposed on said porous support.

The aforementioned porous support is typically a microporous support. The particular microporous support employed is not critical to the present invention but is generally a polymeric material containing pore sizes which are of sufficient size to permit the passage of permeate therethrough but not large enough so as to interfere with the bridging over of the ultrathin membrane formed thereon. The pore size of the support will generally range from 1 to 500 nanometers inasmuch as pores which are larger in diameter than 500 nanometers will permit the ultrathin film to sag into the pores, thus disrupting the flat sheet configuration desired. Examples of microporous supports useful in the present invention include those made of a polysulfone, a polyether sulfone, a polyimide, poly(methyl methacrylate), polyethylene, polypropylene and various halogenated polymers, such as polyvinylidene fluoride. Additional microporous support materials may be found in the patents incorporated herein by reference.

The thickness of the microporous support is not critical to the present invention. Generally, the thickness of the microporous support is about 25 to 125 µm, preferably about 40 to 75 µm.

The aromatic polyamide film of the present invention is typically the interfacial reaction product of a polyfunctional amine reactant and a polyfunctional amine-reactive reactant. The polyfunctional amine reactant employed in the present invention is preferably an essentially monomeric amine having at least two amine functional groups, more preferably 2 to 3 amine functional groups. The amine functional group is typically a primary or secondary amine functional group, preferably a primary amine functional group. The particular polyamine employed in the present invention is not critical thereto and may be a single polyamine or a combination thereof. Examples of suitable polyamines include aromatic primary diamines, such as meta-phenylenediamine and paraphenylenediamine and substituted derivatives thereof, wherein the substituent includes, e.g., an alkyl group, such as a methyl group or an ethyl group, an alkoxy group, such as a methoxy group or an ethoxy group, a hydroxy alkyl group, a hydroxyl group or a halogen atom. Additional examples of suitable polyamines include alkanediamines, such as 1,3-propanediamine and its homologs with or without N-alkyl or aryl substituents, cycloaliphatic primary diamines, cycloaliphatic secondary diamines, such as piperazine and its alkyl derivatives, aromatic secondary amines, such as N,N-dimethyl- 1,3-phenylenediamine, N,N-diphenylethylene diamine, benzidine, xylylene diamine and derivatives thereof. Other suitable polyamines may be found in the patents incorporated herein by reference. The preferred polyamines of the present invention are aromatic primary diamines, more preferably m-phenylenediamines.

The polyfunctional amine reactant is typically present in an aqueous solution in an amount in the range of from about 0.1 to 20%, preferably 0.5 to 8%, by weight, of the aqueous solution. The pH of the aqueous solution is in the range of from about 7 to 13. The pH can be adjusted by the addition of a basic acid acceptor in an amount ranging from about 0.001% to about 5%, by weight, of the solution. Examples of the aforementioned basic acid acceptor include hydroxides, carboxylates, carbonates, borates, phosphates of alkali metals, and trialkylamines.

In addition to the aforementioned polyfunctional amine reactant (and, if desired, the aforementioned basic acid acceptor), the aqueous solution may further comprise additives of the type described in the patents incorporated herein by reference, such additives including, for example, polar solvents, amine salts and polyfunctional tertiary amines (either in the presence or absence of a strong acid).

The polyfunctional amine-reactive reactant employed in the present invention is one or more compounds selected from the group consisting of a polyfunctional acyl halide, a polyfunctional sulfonyl halide and a polyfunctional isocyanate. Preferably, the polyfunctional amine-reactive reactant is an essentially monomeric, aromatic, polyfunctional acyl halide, examples of which include di- or tricarboxylic acid halides, such as trimesoyl chloride (TMC), isophthaloyl chloride (IPC), terephthaloyl chloride (TPC) and mixtures thereof. Examples of other polyfunctional aminereactive reactants are disclosed in the patents incorporated herein by reference.

The polyfunctional amine-reactive reactant is typically present in an organic solvent solution, the solvent for said organic solvent solution comprising any organic liquid immiscible with water. The polyfunctional amine-reactive reactant is typically present in the organic liquid in an amount in the range of from about 0.005 to 5 wt % preferably 0.01 to 0.5 wt % of the solution. Examples of the aforementioned organic liquid include hexane, cyclohexane, heptane, alkanes having from 8 to 12 carbon atoms, and halogenated hydrocarbons, such as the FREON series. Other examples of the above-described organic liquid may be found in the patents incorporated herein by reference.

Preferred organic solvents are alkanes having from 8 to 12 carbon atoms and mixtures thereof. ISOPAR^{®} solvent (Exxon Corp.) is such a mixture of alkanes having from 8 to 12 carbon atoms.

In accordance with the teachings of the present invention, the polyamide layer of the membrane is modified by the covalent bonding of iodine atoms thereto. This modification is effected by treating the polyamide layer with a compound that comprises at least one iodine atom. Examples of compounds that comprise at least one iodine atom include, but are not limited to, molecular iodine (I₂), iodine monobromide (IBr), iodine monochloride (ICl), iodine trichloride (ICl₃), and complexes of molecular iodine and an iodide salt (e.g., KI₃). Preferably, the manner by which the polyamide membrane is treated with the compound comprising at least one iodine atom is by providing an aqueous solution in which the compound is dissolved and then by contacting the membrane with the aqueous solution.

The above-described compound comprising at least one iodine atom is typically present in the aqueous solution used to contact the polyamide membrane in an amount ranging from about 0.1 to 500 ppm (ppm means part per million and corresponds to mg per liter), preferably 0.5 to 100 ppm of the aqueous solution.

Many of the above-identified compounds comprising at least one iodine atom, such as molecular iodine, iodine monobromide, iodine monochloride and iodine trichloride, are available commercially or can be easily made in a laboratory. Accordingly, an aqueous solution comprising such a compound may be made simply by dissolving the previously-prepared compound in water. However, whereas some compounds like iodine trichloride dissolve rather easily in water, other compounds like molecular iodine, iodine monochloride and iodine monobromide are only slightly soluble in water. Consequently, it may take several hours to dissolve these compounds in water to achieve a concentration of 5 ppm. In order to improve the dissolution of these compounds in water, one may dissolve the compound in a water-soluble organic solvent and then mix this solution with water to yield an aqueous solution containing the compound. In this manner, an aqueous solution containing the compound can be achieved in less than twenty minutes. Examples of suitable watersoluble organic solvents that may be used for this purpose include, but are not limited to, alcohols, such as ethanol and isopropyl alcohol; ethers, such as methoxyethyl ether, ethylene glycol dimethyl ether, and tetrahydrofuran; sulfoxides, such as dimethyl sulfoxide and tetramethylene sulfoxide; sulfones, such as dimethyl sulfone, ethyl sulfone and tetramethylene sulfone; amides, such as N,N-dimethyl acetamide, N,N-dimethyl formamide, N-methyl acetamide, N-methyl propionamide and N-methyl pyrrolidinone; esters, such as ethyl acetate and methyl propionate; and nitriles, such as acetonitrile and propionitrile. For example, 0.3 g iodine monobromide may be dissolved in 5 g methoxyethyl ether, with the resulting solution poured to 301 water to give an aqueous solution of 5 ppm iodine monobromide.

Alternatively, instead of dissolving the previously-prepared compound in water (with or without the use of a water-soluble organic solvent), many of these compounds may be formed in situ in an aqueous solution by adding an oxidizing agent and an iodide salt to the aqueous solution. Examples of a suitable oxidizing agent include, but are not limited to, molecular chlorine, sodium hypochlorite, sodium chlorite, sodium chlorate, sodium perchlorate, molecular bromine, sodium bromate, potassium iodate, potassium periodate, sodium persulfate, sodium permanganate, sodium chromate, sodium percabonate, sodium perborate, hydrogen peroxide and its derivatives, such as peracetic acid and perbenzoic acid. Examples of a suitable iodide salt include all water-soluble iodide compounds, such as, but not being limited to, sodium iodide, potassium iodide, lithium iodide, hydrogen iodide, ammonium iodide, cesium iodide, magnesium iodide, and calcium iodide.

For example, molecular iodine may be produced by reacting in water an iodide salt, such as sodium iodide or potassium iodide, with an oxidizing compound, such as molecular chlorine, sodium hypochlorite, sodium chlorite, sodium chlorate, sodium perchlorate, molecular bromine, sodium bromate, potassium iodate, potassium periodate, sodium persulfate, sodium permanganate, sodium chromate, sodium percarbonate, sodium perborate, hydrogen peroxide and its derivatives, such as peracetic acid and perbenzoic acid. Iodine bromides, such as iodine monobromide, may be obtained in situ by reacting molecular iodine with molecular bromine in specific ratios. Iodine chlorides, such as iodine monochloride and iodine trichloride, may be obtained in situ by reacting molecular iodine with molecular chlorine in specific ratios.

In accordance with the teachings of the present invention, a composite polyamide reverse osmosis membrane having a high rejection coefficient for boric acid and other general pH range nondissociative substances may be made as follows: First, the above-described porous support is coated with the above-described aqueous solution utilizing either a hand coating or a continuous operation, and the excess solution is removed from the support by rolling, sponging, air knifing or other suitable techniques. Following this, the coated support material is then contacted, for example, by dipping or spraying, with the above-described organic solvent solution and allowed to remain in place for a period of time in the range of from about 5 seconds to about 10 minutes, preferably about 20 seconds to 4 minutes. The resulting product is then dried at a temperature below 50°C, preferably by air-drying at room temperature, for about 1 minute, then rinsed in a basic aqueous solution, such as 0.2% sodium carbonate, for a period of time in the range of from about 1 minute to 30 minutes at a temperature in the range from about room temperature to 95°C, and then rinsed with deionized water.

The polyamide membrane is then contacted, by dipping or spraying, with an aqueous solution of a compound comprising at least one iodine atom at a temperature ranging from about room temperature to 95°C for a period of about 1 minute to 10 hours at a pH ranging from about 2 to 11, preferably about 3 to 10. Alternatively, the membrane maybe contacted in vapor phase with said iodine atom-containing compound, which compound can be vaporized at a temperature ranging from about room temperature to 95°C. Alternatively, the polyamide membrane may also be treated in a pressurized system with an aqueous solution of said compound by passing the solution through the membrane in a crossflow mode at a pressure of about 3.4 bar [50 psi] to 55.2 bar [800 psi] and a temperature ranging from about 20°C to 40°C for a period of about 1 minute to 1 hour at a pH ranging from about 2 to 11, preferably about 3 to 10.

The presence of iodine in the polyamide layer of the membrane after the aforementioned treatment was confirmed by electron spectroscopy for chemical analysis (ESCA). A polyamide membrane having more than 0.05% atomic concentration of iodine measured by ESCA showed higher boron rejection than an untreated control membrane.

The following examples are provided for illustrative purposes only and are in no way intended to limit the scope of the present invention:

### EXAMPLE 1

A 140 µm thick microporous polysulfone support including the backing nonwoven fabric was soaked in an aqueous solution containing 3 wt % of meta-phenylenediamine (MPD) and 0.05 wt % 2-ethyl-1,3-hexanediol for 40 seconds. The support was drained and nip rolled to remove the excess aqueous solution. Then, the coated support was dipped in a solution of 0.1 wt % trimesoyl chloride (TMC) and 0.14 wt % isophthaloyl chloride (IPC) in Isopar® solvent (Exxon Corp.) for 1 minute followed by draining the excess organic solution off the support. The resulting composite membrane was air-dried for about 1 minute and then rinsed in 0.2% Na₂CO₃ aqueous solution for 30 minutes at room temperature, and then rinsed in deionized water.

The initial performance of the membrane was measured by passing an aqueous solution containing 32000 ppm of NaCl and 5 ppm boron (in the form of boric acid) through the membrane in a crossflow mode at 55.2 bar [800 psi] and 25°C at a pH of 8. The salt rejection and the boron rejection were 99.5% and 86%, respectively, and the flux was 30.6 l/m²h [18 gfd]. The membrane was then further treated with an aqueous solution of 100 ppm sodium hypochlorite (NaOCl) and 20 ppm potassium iodide (KI) at pH 5 by passing the iodine solution through the membrane in a crossflow mode at 15.5 l/m²h [225 psi] and 25°C for 30 minutes. After the iodine solution treatment, the salt rejection and the boron rejection were tested under the same conditions described above and were found to be 99.7% and 95%, respectively. The flux was also tested under the same conditions above and was found to be 26.4 l/m²h [15.2 gfd]. Table I presents the data described above.

### COMPARATIVE EXAMPLE 1

The same procedure as set forth in Example 1 was carried out for Comparative Example 1, except that the membrane was not further treated with an aqueous solution containing an iodine compound. The salt rejection, the boron rejection, and the flux were 99.5%, 86% and 30.6 l/m²h [18 gfd], respectively, as noted below in Table I.

### COMPARATIVE EXAMPLE 2

The same procedure as set forth in Example I was carried out for Comparative Example 2, except that, instead of treating the membrane with an aqueous solution containing an iodine compound, the membrane was treated with an aqueous solution of 100 ppm sodium hypochlorite (NaOCl) and 10 ppm sodium bromide (NaBr) at pH 5. The salt rejection, the boron rejection, and the flux were 99.7%, 93.6% and 20.1 l/m²h [11.8 gfd], respectively, as noted below in Table I.

### EXAMPLE 2

The same procedure as set forth in Example 1 was carried out for Example 2, except that, instead of treating the membrane with an aqueous solution containing sodium hypochlorite (NaOCl) and potassium iodide (KI) (presumably to yield in situ molecular iodine), the membrane was treated with an aqueous solution at pH 9 of 5 ppm molecular iodine (I₂). The salt rejection, the boron rejection, and the flux were 99.7%, 94.1% and 24.0 l/m²h [14.1 gfd], respectively, as noted below in Table I.

### EXAMPLE 3

The same procedure as set forth in Example 1 was carried out for Example 3, except that, instead of treating the membrane with an aqueous solution containing sodium hypochlorite (NaOCl) and potassium iodide (KI) (presumably to yield in situ molecular iodine), the membrane was treated with an aqueous solution at pH 9 of 5 ppm iodine bromide (IBr). The salt rejection, the boron rejection, and the flux were 99.7%, 95.0% and 23.8 l/m²h [14.0 gfd], respectively, as noted below in Table I.

### EXAMPLE 4

The same procedure as set forth in Example 1 was carried out for Example 4, except that, instead of treating the membrane with an aqueous solution containing sodium hypochlorite (NaOCl) and potassium iodide (KI) (presumably to yield in situ molecular iodine), the membrane was treated with an aqueous solution at pH 9 of 5 ppm iodine chloride (ICI). The salt rejection, the boron rejection, and the flux were 99.6%, 94.6% and 20.2 l/m²h [11.9 gfd], respectively, as noted below in Table I.

### EXAMPLE 5

The same procedure as set forth in Example 1 was carried out for Example 5, except that, instead of treating the membrane with an aqueous solution containing sodium hypochlorite (NaOCl) and potassium iodide (KI) (presumably to yield in situ molecular iodine), the membrane was treated with an aqueous solution at pH 5.5 of 3 ppm molecular iodine (I₂). The salt rejection, the boron rejection, and the flux were 99.7%, 93.9% and 20.1 l/m²h [11.8 gfd], respectively, as noted below in Table I.

### EXAMPLE 6

The same procedure as set forth in Example 1 was carried out for Example 6, except that, instead of treating the membrane with an aqueous solution containing sodium hypochlorite (NaOCl) and potassium iodide (KI) (presumably to yield in situ molecular iodine), the membrane was treated with an aqueous solution at pH 5.5 of 3 ppm iodine bromide (IBr). The salt rejection, the boron rejection, and the flux were 99.8%, 95.6% and 16.7 l/m²h [9.8 gfd], respectively, as noted below in Table I.

### EXAMPLE 7

The same procedure as set forth in Example I was carried out for Example 7, except that, instead of treating the membrane with an aqueous solution containing sodium hypochlorite (NaOCl) and potassium iodide (KI) (presumably to yield in situ molecular iodine), the membrane was treated with an aqueous solution at pH 5.5 of 3 ppm iodine chloride (IC1). The salt rejection, the boron rejection, and the flux were 99.6%, 97.0% and 16.5 l/m²h [9.7 gfd], respectively, as noted below in Table I.

### EXAMPLE 8

The same procedure as set forth in Example 1 was carried out for Example 8, except that, instead of treating the membrane with an aqueous solution containing sodium hypochlorite (NaOCl) and potassium iodide (KI) (presumably to yield in situ molecular iodine), the membrane was treated with an aqueous solution at pH 3.9 of 5 ppm iodine trichloride (ICl₃). The salt rejection, the boron rejection, and the flux were 99.7%, 95.0% and 15.1 l/m²h [8.9 gfd], respectively, as noted below in Table I.

### EXAMPLE 9

The same procedure as set forth in Example 1 was carried out for Example 9, except that, instead of treating the membrane with an aqueous solution containing sodium hypochlorite (NaOCl) and potassium iodide (KI) (presumably to yield in situ molecular iodine), the membrane was treated with an aqueous solution at pH 3 of 100 ppm peracetic acid and 20 ppm potassium iodide (KI) (presumably to yield in situ molecular iodine). The salt rejection, the boron rejection, and the flux were 99.7%, 95.5% and 15.5 l/m²h [9.1 gfd], respectively, as noted below in Table I.

### EXAMPLE 10

The same procedure as set forth in Example 1 was carried out for Example 10, except that, instead of treating the membrane with an aqueous solution containing sodium hypochlorite (NaOCl) and potassium iodide (KI) (presumably to yield in situ molecular iodine), the membrane was treated with an aqueous solution of 5 ppm potassium periodate (KIO₄) and 18 ppm potassium iodide (KI) (presumably to yield in situ molecular iodine). The salt rejection, the boron rejection, and the flux were 99.7%, 94.0% and 19.6 l/m²h [11.5 gfd], respectively, as noted below in Table I.

### EXAMPLE 11

The same procedure as set forth in Example 1 was carried out for Example 11, except that, instead of treating the membrane with an aqueous solution containing sodium hypochlorite (NaOCl) and potassium iodide (KI) (presumably to yield in situ molecular iodine), the membrane was treated with an aqueous solution of 20 ppm potassium iodide-iodine complex (KI₃) (presumably to yield in situ molecular iodine). The salt rejection, the boron rejection, and the flux were 99.6%, 93.6% and 22.6 l/m²h [13.3 gfd], respectively, as noted below in Table I.

**TABLE I**

| Membrane | Salt Rejection (%) | Boron Rejection (%) | Flux (l/m²h) / (gfd) |
|---|---|---|---|
| Comparative Example 1 | 99.5 | 86.0 | 30.6 / 18.0 |
| Comparative Example 2 | 99.7 | 93.6 | 20.1 / 11.8 |
| Example 1 | 99.7 | 95.0 | 26.4 / 15.2 |
| Example 2 | 99.7 | 94.1 | 24.0 / 14.1 |
| Example 3 | 99.7 | 95.0 | 23.8 / 14.0 |
| Example 4 | 99.6 | 94.6 | 20.2 / 11.9 |
| Example 5 | 99.7 | 93.9 | 20.1 / 11.8 |
| Example 6 | 99.8 | 95.6 | 16.7 / 9.8 |
| Example 7 | 99.6 | 97.0 | 16.5 / 9.7 |
| Example 8 | 99.7 | 95.0 | 15.1 / 8.9 |
| Example 9 | 99.7 | 95.5 | 15.5 / 9.1 |
| Example 10 | 99.7 | 94.0 | 19.6 / 11.5 |
| Example 11 | 99.6 | 93.6 | 22.6 / 13.3 |

As can be seen, the membranes treated with compounds comprising an iodine atom (Examples 1-11) exhibited a significantly higher boron rejection than did the untreated membrane (Comparative Example 1). In addition, the membranes of Examples 1-10 exhibited a higher boron rejection than did the membrane treated with bromine (Comparative Example 2), with the membranes of Examples 1-4 also exhibiting a higher flux than the bromine-treated membrane (Comparative Example 2) and the membranes of Examples 6-10 showing a significantly greater boron rejection than the bromine-treated membrane (Comparative Example 2). Moreover, the membrane of Example 11, while exhibiting a boron rejection comparable to that of the membrane treated with bromine (Comparative Example 2), exhibited a considerably greater flux.

## Claims

1. A composite polyamide reverse osmosis membrane, said composite polyamide reverse osmosis membrane being prepared by a process comprising:
(a) providing a microporous support;
(b) forming an aromatic polyamide layer over said microporous support; and
(c) treating said aromatic polyamide layer with a quantity of a compound, said compound comprising at least one iodine atom selected from the group consisting of molecular iodine, iodine monobromide, iodine monochloride, iodine trichloride, and potassium triiodide, whereby iodine atoms covalently bond to said aromatic polyamide layer, said aromatic polyamide layer contains iodine atoms in a concentration of at least 0.05% atomic concentration, as measured by electron spectroscopy for chemical analysis.

2. The composite polyamide reverse osmosis membrane as claimed in claim 1,
wherein said treating step comprises providing an aqueous solution comprising said compound and then contacting said aromatic polyamide layer with said aqueous solution.

3. The composite polyamide reverse osmosis membrane as claimed in claim 2,
wherein said aqueous solution is prepared by providing said compound and then dissolving said compound in an aqueous solvent.

4. The composite polyamide reverse osmosis membrane as claimed in claim 3,
wherein said dissolving step comprises first dissolving said compound in a water-soluble organic solvent and then adding water to said water-soluble organic solvent into which said compound has been dissolved.

5. The composite polyamide reverse osmosis membrane as claimed in claim 2,
wherein said aqueous solution is prepared by adding an iodide salt and an oxidizing agent to an aqueous solvent in order to generate said compound in situ.

6. A method of preparing a composite polyamide reverse osmosis membrane according to one of claims 1 to 5, said method comprising the steps of:
(a) providing a microporous support;
(b) forming an aromatic polyamide layer over said microporous support;
(c) providing an aqueous solution comprising a quantity of a compound, said compound comprising at least one iodine atom selected from the group consisting of molecular iodine, iodine monobromide, iodine monochloride, iodine trichloride, and potassium triiodide; and then
(d) treating said aromatic polyamide layer with said aqueous solution by contacting said polyamide layer with said aqueous solution at a pH ranging from about 2 to 11, whereby iodine atoms covalently bond to said polyamide layer.

7. The method as claimed in claim 6, wherein said compound is selected from the group consisting of iodine monobromide, iodine monochloride and iodine trichloride.

8. The method as claimed in claim 6 or 7, wherein said aqueous solution is prepared by providing said compound and then dissolving said compound in an aqueous solvent.

9. The method as claimed in claim 8, wherein said dissolving step comprises first dissolving said compound in a water-soluble organic solvent and then adding water to said water-soluble organic solvent into which said compound has been dissolved.

10. The method as claimed in claim 9, wherein said water-soluble organic solvent is selected from the group consisting of alcohols, ethers, sulfoxides, sulfones, amides, esters, and nitriles.

11. The method as claimed in claim 10, wherein said water-soluble organic solvent is selected from the group consisting of ethanol, isopropyl alcohol, methoxyethyl ether, ethylene glycol dimethyl ether, tetrahydrofuran, dimethyl sulfoxide, tetramethylene sulfoxide, dimethyl sulfone, ethyl sulfone, tetramethylene sulfone, N,N-dimethyl acetamide, N,N-dimethyl formamide, N-methyl acetamide, N-methyl propionamide, N-methyl pyrrolidinone, ethyl acetate, methyl propionate, acetonitrile and propionitrile.

12. The method as claimed in claim 6 or 7, wherein said aqueous solution is prepared by adding an iodide salt and an oxidizing agent to an aqueous solvent in order to generate said compound in situ.

13. The method as claimed in claim 12, wherein said oxidizing agent is selected from the group consisting of molecular chlorine, sodium hypochlorite, sodium chlorite, sodium chlorate, sodium perchlorate, molecular bromine, sodium bromate, potassium iodate, potassium periodate, sodium persulfate, sodium permanganate, sodium chromate, sodium percabonate, sodium perborate, and hydrogen peroxide and its derivatives.

14. The method as claimed in claim 6 or 7, wherein said compound comprising at least one iodine atom is present in said aqueous solution in an amount ranging from about 0.1 to 500 ppm of said aqueous solution.

15. The method as claimed in claim 14, wherein said compound comprising at least one iodine atom is present in said aqueous solution in an amount ranging from about 0.5 to 100 ppm of said aqueous solution.

16. The method as claimed in claim 6 or 7, wherein said contacting step comprises dipping or spraying said aromatic polyamide layer with said aqueous solution at a temperature in the range of room temperature to 95°C for a period of about 1 minute to 10 hours at a pH ranging from about 2 to 11.

17. The method as claimed in claim 6 or 7, wherein said contacting step comprises passing said aqueous solution through the aromatic polyamide layer in a crossflow mode at a pressure of about 3.4 bar [50 psi] to 55.2 bar [800 psi] and at a temperature ranging from about 20°C to 40°C for a period of about 1 minute to 1 hour at a pH ranging from about 2 to 11.

## Patentansprüche

1. Polyamidbasierte Umkehrosmose-Kompositmembran, wobei die polyamidbasierte Umkehrosmose-Kompositmembran mittels eines Verfahrens hergestellt ist, welches die folgenden Schritte umfasst:
(a) Bereitstellen eines mikroporösen Trägers;
(b) Ausbilden einer aromatischen Polyamidschicht auf dem mikroporösen Träger; und
(c) Behandeln der aromatischen Polyamidschicht mit einer Quantität einer Verbindung,
wobei die Verbindung wenigstens ein lodatom enthält, welches aus einer Gruppe ausgewählt ist, die molekulares Iod, lodmonobromid, lodmonochlorid, lodtrichlorid und Kaliumtriiodid umfasst, wobei die lodatome kovalent an die aromatische Polyamidschicht binden, und wobei die aromatische Polyamidschicht lodatome in einer Atomkonzentration von wenigstens 0,05% enthält, welche mittels Elektronenspektroskopie zur chemischen Analyse gemessen worden ist.

2. Polyamidbasierte Umkehrosmose-Kompositmembran nach Anspruch 1, wobei der Behandlungsschritt das Bereitstellen einer wässrigen Lösung, welche die Verbindung enthält, sowie das anschließende Inkontaktbringen der aromatischen Polyamidschicht mit der wässrigen Lösung umfasst.

3. Polyamidbasierte Umkehrosmose-Kompositmembran nach Anspruch 2, wobei die wässrige Lösung durch Bereitstellen der Verbindung und anschließendes Lösen dieser Verbindung in einem wässrigen Lösungsmittel hergestellt ist.

4. Polyamidbasierte Umkehrosmose-Kompositmembran nach Anspruch 3, wobei der Löseschritt zunächst das Lösen der Verbindung in einem wasserlöslichen organischen Lösungsmittel sowie das anschließende Zugeben von Wasser in das wasserlösliche organische Lösungsmittel, in welchem die Verbindung gelöst worden ist, umfasst.

5. Polyamidbasierte Umkehrosmose-Kompositmembran nach Anspruch 2, wobei die wässrige Lösung durch Zugeben einen lodsalzes sowie eines Oxidationsmittels in ein wässriges Lösungsmittel hergestellt ist, um die Verbindung in situ zu erzeugen.

6. Verfahren zur Herstellung einer polyamidbasierten Umkehrosmose-Kompositmembran nach einem der Ansprüche 1 bis 5, wobei das Verfahren die folgenden Schritte umfasst:
(a) Bereitstellen eines mikroporösen Trägers;
(b) Ausbilden einer aromatischen Polyamidschicht auf dem mikroporösen Träger;
(c) Bereitstellen einer wässrigen Lösung, welche eine Quantität einer Verbindung enthält, wobei die Verbindung wenigstens ein Iodatom enthält, welches aus einer Gruppe ausgewählt ist, die molekulares lod, lodmonobromid, lodmonochlorid, lodtrichlorid und Kaliumtriiodid umfasst; und sodann
(d) Behandeln der aromatischen Polyamidschicht mit der wässrigen Lösung, indem die Polyamidschicht mit der wässrigen Lösung bei einem pH-Wert von etwa 2 bis 11 in Kontakt gebracht wird, wobei lodatome kovalent an die Polyamidschicht binden.

7. Verfahren nach Anspruch 6, wobei die Verbindung aus einer Gruppe ausgewählt ist, welche lodmonobromid, lodmonochlorid und lodtrichlorid umfasst.

8. Verfahren nach Anspruch 6 oder 7, wobei die wässrige Lösung durch Bereitstellen der Verbindung und anschließendes Lösen dieser Verbindung in einem wässrigen Lösungsmittel hergestellt wird.

9. Verfahren nach Anspruch 8, wobei der Löseschritt zunächst das Lösen der Verbindung in einem wasserlöslichen organischen Lösungsmittel sowie das anschließende Zugeben von Wasser in das wasserlösliche organische Lösungsmittel, in welchem die Verbindung gelöst worden ist, umfasst.

10. Verfahren nach Anspruch 9, wobei das wasserlösliche organische Lösungsmittel aus einer Gruppe ausgewählt ist, welche Alkohole, Ether, Sulfone, Amide, Ester und Nitrile umfasst.

11. Verfahren nach Anspruch 10, wobei das wasserlösliche organische Lösungsmittel aus einer Gruppe ausgewählt ist, welche Ethanol, Isopropylalkohol, Methoxymethylether, Ethylenglykoldimethylether, Tetrahydrofuran, Dimethylsulfoxid, Tetramethylensulfoxid, Dimethylsulfon, Ethylsulfon, Tetramethylensulfon, N,N-Dimethylacetamid, N,N-Dimethylformamid, N-Methylacetamid, N-Methylpropionamid, N-Methylpyrrolidon, Ethylacetat, Methylpropionat, Acetonitril und Propionitril umfasst.

12. Verfahren nach Anspruch 6 oder 7, wobei die wässrige Lösung durch Zugeben eines lodsalzes sowie eines Oxidationsmittels in ein wässriges Lösungsmittel hergestellt wird, um die Verbindung in situ zu erzeugen.

13. Verfahren nach Anspruch 12, wobei das Oxidationsmittel aus einer Gruppe gewählt ist, welche molekulares Chlor, Natriumhypochlorit, Natriumchlorit, Natriumchlorat, Natriumperchlorat, molekulares Brom, Natriumbromat, Kaliumiodat, Kaliumperiodat, Natriumpersulfat, Natriumpermanganat, Natriumchromat, Natriumpercarbonat, Natriumperborat, Wasserstoffperoxid und deren Derivate umfasst.

14. Verfahren nach Anspruch 6 oder 7, wobei die Verbindung, welche wenigstens ein lodatom enthält, in der wässrigen Lösung in einer Menge zwischen etwa 0,1 und 500 ppm der wässrigen Lösung enthalten ist.

15. Verfahren nach Anspruch 14, wobei die Verbindung, welche wenigstens ein Iodatom enthält, in der wässrigen Lösung in einer Menge zwischen etwa 0,5 und 100 ppm der wässrigen Lösung enthalten ist.

16. Verfahren nach Anspruch 6 oder 7, wobei der Schritt des Inkontaktbringens das Eintauchen oder Besprühen der aromatischen Polyamidschicht in die bzw. mit der wässrige(n) Lösung bei einer Temperatur im Bereich von Raumtemperatur bis 95°C über einen Zeitraum von etwa einer Minute bis 10 Stunden bei einem pH-Wert von etwa 2 bis 11 umfasst.

17. Verfahren nach Anspruch 6 oder 7, wobei der Schritt des Inkontaktbringens das Passieren der wässrigen Lösung durch die aromatische Polyamidschicht in einem Kreuzstrommodus bei einem Druck von etwa 3,4 bar [50 psi] bis 55,2 bar [800 psi] und einer Temperatur im Bereich von etwa 20°C bis 40°C über einen Zeitraum von etwa einer Minute bis einer Stunde bei einem pH-Wert von etwa 2 bis 11 umfasst.

## Revendications

1. Membrane d'osmose inverse composite en polyamide, ladite membrane d'osmose inverse composite en polyamide étant préparée à l'aide d'un procédé comprenant :
(a) l'apport d'un support microporeux ;
(b) la formation d'une couche polyamide aromatique au-dessus dudit support microporeux ; et
(c) le traitement de ladite couche polyamide aromatique avec une certaine quantité de composé, ledit composé comprenant au moins un atome d'iode sélectionné dans le groupe constitué par l'iode moléculaire, le monobromure d'iode, le monochlorure d'iode, le trichlorure d'iode, et triiodure de potassium, sachant que les atomes d'iode présentent des liaisons covalentes avec ladite couche polyamide aromatique, ladite couche polyamide aromatique contenant des atomes d'iode dans une concentration d'au moins 0,05% en concentration atomique, telle que mesurée par spectroscopie photoélectronique pour analyse chimique.

2. Membrane d'osmose inverse composite en polyamide selon la revendication 1, dans laquelle ladite étape de traitement comprend l'apport d'une solution aqueuse comprenant ledit composé pour la mise en contact de ladite couche polyamide aromatique avec ladite solution aqueuse.

3. Membrane d'osmose inverse composite en polyamide selon la revendication 2, dans laquelle ladite solution aqueuse est préparée en apportant ledit composé puis en dissolvant ledit composé dans un solvant aqueux.

4. Membrane d'osmose inverse composite en polyamide selon la revendication 3, dans laquelle ladite étape de dissolution comprend tout d'abord la dissolution dudit composé dans un solvant organique soluble dans l'eau puis l'ajout d'eau audit solvant organique soluble dans l'eau dans lequel ledit composé a été dissolu.

5. Membrane d'osmose inverse composite en polyamide selon la revendication 2, dans laquelle ladite solution aqueuse est préparée en ajoutant du sel d'iodure et un agent oxydant à un solvant aqueux afin de produire ledit composé in situ.

6. Procédé de préparation d'une membrane d'osmose inverse composite en polyamide selon l'une quelconque des revendications 1 à 5, ledit procédé comprenant les étapes consistant à :
(a) fournir un support microporeux ;
(b) former une couche polyamide aromatique au-dessus dudit support microporeux ;
(c) fournir une solution aqueuse comprenant une certaine quantité d'un composé, ledit composé comprenant au moins un atome d'iode sélectionné dans le groupe constitué par l'iode moléculaire, le monobromure d'iode, le monochlorure d'iode, le trichlorure d'iode, et le triiodure de potassium ; puis
(d) traiter ladite couche polyamide aromatique avec ladite solution aqueuse en mettant en contact ladite couche polyamide avec ladite solution aqueuse à un pH allant de 2 à 11 environ, les atomes d'iode présentant une liaison covalente avec ladite couche polyamide.

7. Procédé selon la revendication 6, dans lequel ledit composé est sélectionné dans le groupe constitué par le monobromure d'iode, le monochlorure d'iode et le trichlorure d'iode.

8. Procédé selon la revendication 6 ou 7, dans lequel ladite solution aqueuse est préparée en fournissant ledit composé puis en dissolvant ledit composé dans un solvant aqueux.

9. Procédé selon la revendication 8, dans lequel ladite étape de dissolution comprend tout d'abord la dissolution dudit composé dans un solvant organique soluble dans l'eau puis l'ajout d'eau audit solvant organique soluble dans l'eau dans lequel ledit composé a été dissolu.

10. Procédé selon la revendication 9, dans lequel ledit solvant organique soluble dans l'eau est sélectionné dans le groupe constitué par les alcools, les éthers, les sulfoxydes, les sulfones, les amides, les esters et les nitriles.

11. Procédé selon la revendication 10, dans lequel ledit solvant organique soluble dans l'eau est sélectionné dans le groupe constitué par l'éthanol, l'alcool isopropylique, l'éther méthoxyéthylique, l'éthylène-glycol-diméthyle-éther, le tétrahydrofurane, le sulfoxyde de diméthyle, sulfoxyde de tétraméthylène, le sulfone diméthylique, le sulfone éthylique, le sulfone tétraméthylénique, le N,N-diméthylacétamide, le N,N-diméthylformamide, le N-méthylacétamide, le N-méthylpropionamide, le N-méthylpyrrolidinone, l'acétate d'éthyle, le propionate de méthyle, l'acétonitrile et le propionitrile.

12. Procédé selon la revendication 6 ou 7, dans lequel ladite solution aqueuse est préparée en ajoutant un sel d'iodure et un agent oxydant à un solvant aqueux afin de produire ledit composé in situ.

13. Procédé selon la revendication 12, dans lequel ledit agent oxydant est sélectionné dans le groupe constitué par le chlore moléculaire, l'hypochlorite de sodium, le chlorite de sodium, le chlorate de sodium, le perchlorate de sodium, le brome moléculaire, le bromate de sodium, l'iodate de potassium, le périodate de potassium, le persulfate de sodium, le permanganate de sodium, le chromate de sodium, le percarbonate de sodium, le perborate de sodium et le peroxyde d'hydrogène et ses dérivés.

14. Procédé selon la revendication 6 ou 7, dans lequel ledit composé comprenant au moins un atome d'iode est présent dans ladite solution aqueuse dans une quantité allant de 0,1 à 500 ppm environ de ladite solution aqueuse.

15. Procédé selon la revendication 14, dans lequel ledit composé comprenant au moins un atome d'iode est présent dans ladite solution aqueuse dans une quantité allant de 0,5 à 100 ppm environ de ladite solution aqueuse.

16. Procédé selon la revendication 6 ou 7, dans lequel ladite étape de mise en contact comprend le plongement ou la pulvérisation de ladite couche polyamide aromatique avec ladite solution aqueuse à une température comprise dans la plage allant de la température en salle à 95°C pendant environ 1 minute à 10 heures à un pH allant de 2 à 11 environ.

17. Procédé selon la revendication 6 ou 7, dans lequel ladite étape de mise en contact comprend le fait de passer ladite solution aqueuse à travers la couche polyamide aromatique selon un mode d'écoulement croisé à une pression d'environ 3,4 bars [50 psi] à 55,2 bars [800 psi] et à une température allant de 20°C à 40°C environ pendant une période allant d'1 minute à 1 heure environ à un pH allant de 2 à 11 environ.
